# DEMANDE DE BREVET EUROPEEN

(11) **EP 2 814 268 A1**
(43) Date de publication de la demande: **17.12.2014**
(21) Numéro de dépôt: 13305794.3
(22) Date de dépôt: 12.06.2013
(51) Int. Cl.: H04W 4/00, H04W 8/08, H04W 48/18

(54) **Procédé de connexion d'un terminal de type M2M comprenant un MIM à un réseau d'un fournisseur de service LBO**

(71) Demandeur: Gemalto SA, 92190 Meudon (FR)
(72) Inventeur: Tuilier, Edmond, 13705 La Ciotat (FR); Kuc, Jean-François, 13705 La Ciotat (FR)

(57) **Abrégé**

L'invention concerne un procédé de connexion d'un terminal (10) de type M2M comprenant un MIM (11) à un fournisseur de service LBO (15), le procédé consistant à :
a- Détecter que le terminal (10) est en situation d'itinérance ;
b- Automatiquement connecter le terminal (10) au réseau du fournisseur de service LBO (15) en fournissant du MIM (11) au terminal (10) l'APN du fournisseur de service LBO (15).

## Description

Le domaine de l'invention est celui des télécommunications, notamment dans des réseaux cellulaires tels que GSM, UMTS ou LTE.

Plus précisément, la présente invention concerne un procédé permettant de connecter un terminal de type M2M (« Machine to Machine » en anglais) à un fournisseur de service LBO (« Local Break Out » en anglais).

Un terminal de type M2M est un modem installé dans une machine, par exemple dans un véhicule. Un tel terminal permet au titulaire du véhicule d'être connecté à un réseau de télécommunications, par exemple de type cellulaire. Il peut ainsi par exemple recevoir des informations sur la circulation ou écouter, à l'aide de son autoradio, des morceaux de musique qui sont diffusés par un site tel que Deezer (marque protégée) auprès duquel il aura préalablement contracté un abonnement.

La transmission d'informations ou de musique s'effectue, au niveau du réseau, sous la forme de transmission de données, en opposition à la transmission de la voix réservée aux communications vocales.

Un terminal de type M2M comprend classiquement un élément de sécurité appelé MIM (« Machine Identification Module » en anglais). Un MIM assure certaines des fonctions d'une carte SIM ou UICC classique (authentification de l'utilisateur notamment).

Habituellement, le terminal de l'utilisateur est connecté à son réseau d'appartenance (HPLMN en anglais) auprès de l'opérateur duquel l'utilisateur a souscrit un abonnement. En cas d'itinérance (« roaming » en anglais), le terminal perd sa connexion avec son réseau d'appartenance HPLMN et se rattache à un réseau visité (VPLMN en anglais). Il existe deux modes de sélection du VPLMN :
- Un mode automatique où le terminal utilise une liste de VPLMNs organisée par ordre de priorité. Le VPLMN disponible ayant la plus grande priorité est sélectionné ;
- Un mode manuel où le terminal indique à l'utilisateur quels VPLMNs sont disponibles (sous couverture radio). L'utilisateur sélectionne manuellement un des réseaux disponibles et le terminal se connecte à ce réseau.

Le VPLMN peut être soit un réseau domestique (le terminal utilise un service d'un VPLMN du même pays que son HPLMN - on parle alors d'itinérance domestique ou nationale), soit un réseau étranger (le terminal utilise un service d'un VPLMN d'un pays étranger à son HPLMN - on parle alors d'itinérance internationale).

En situation d'itinérance, l'utilisateur paie des transmissions surtaxées.

Un des problèmes posé par les terminaux M2M se pose précisément en cas d'itinérance : lorsque l'utilisateur d'un véhicule équipé d'un terminal M2M se rend par exemple à l'étranger, il entre en situation d'itinérance. Le terminal se connecte alors à un réseau de ce pays étranger. Dans le cas du M2M, il ne peut être proposé à l'utilisateur de sélectionner le VPLMN auquel le terminal doit se connecter, car il n'existe pas d'interface homme-machine entre l'utilisateur et le terminal. La sélection du VPLMN est donc de type automatique. Pour l'utilisateur d'un terminal M2M, cette situation d'itinérance peut être temporaire (il se rend à l'étranger avec son véhicule pour ses vacances ou un déplacement professionnel) ou permanente (l'utilisateur a acheté son véhicule à l'étranger et ne se déplace pas dans ce pays étranger).

Dans ces deux cas d'itinérance, l'utilisateur d'un terminal M2M paie des transmissions surtaxées.

Il est prévu par ailleurs, à partir de 2014, d'autoriser un utilisateur d'un terminal mobile, tel qu'un téléphone ou un smartphone par exemple, de s'attacher à un VPLMN pour effectuer de la transmission de données. Ce VPLMN devient alors un fournisseur de service LBO pour l'utilisateur. La sélection de cet opérateur est manuelle pour l'utilisateur : il doit sélectionner l'opérateur assurant le service LBO et modifier l'APN (« Access Point Name » en anglais, « nom du point d'accès réseau » en français) de son HPLMN à l'aide de l'interface homme-machine de son téléphone ou smartphone pour se connecter à ce fournisseur de service LBO. Cette sélection s'effectue en principe après avoir consulté les offres tarifaires proposées par les VPLMNs locaux, l'utilisateur sélectionnant le LBO qui lui propose l'offre tarifaire ou le service qui lui convient le mieux (tarification au volume de données échangées, au temps de connexion, à la durée d'abonnement,...).

L'APN d'un opérateur est une URL privée. Il s'agit d'un identifiant qui permet à un utilisateur de téléphonie mobile d'un réseau 2G ou 3G de se connecter à Internet en identifiant le Gateway GPRS Support Node (GGSN) qu'il veut utiliser. L'APN est généralement constitué d'un code identifiant le GGSN (et le réseau IP derrière lui) et des codes MCC et MNC identifiant l'opérateur de téléphonie mobile.

Ainsi, un utilisateur qui se rend à l'étranger pourra se connecter à un VPLMN de son choix pour effectuer du trafic de données, ce VPLMN assurant une fonction de fournisseur de service LBO.

Cette possibilité n'est cependant pas offerte à un utilisateur d'un terminal M2M car il n'existe pas d'interface homme-machine dans le cas de communications M2M.

La présente invention a notamment pour objectif de remédier à cet inconvénient.

Plus précisément, un des objectifs de l'invention est de permettre à un terminal de type M2M de bénéficier d'un service LBO en situation d'itinérance.

Cet objectif, ainsi que d'autres qui apparaîtront par la suite, est atteint grâce à un procédé de connexion d'un terminal de type M2M comprenant un MIM à un fournisseur de service LBO, le procédé consistant à :
a- Détecter que le terminal est en situation d'itinérance ;
b- Automatiquement connecter le terminal au réseau du fournisseur de service LBO en fournissant du MIM au terminal l'APN du fournisseur de service LBO.

Avantageusement, l'étape -a- consiste à détecter dans le MIM que le terminal est en situation d'itinérance.

Alternativement, l'étape -a- consiste à détecter dans le réseau d'appartenance du terminal que le terminal est en situation d'itinérance.

Préférentiellement, l'étape -b- consiste à sélectionner l'APN dans une liste d'opérateurs.

La liste d'opérateurs peut être comprise dans le MIM ou dans une plateforme OTA (« Over The Air » en anglais) du réseau d'appartenance du terminal.

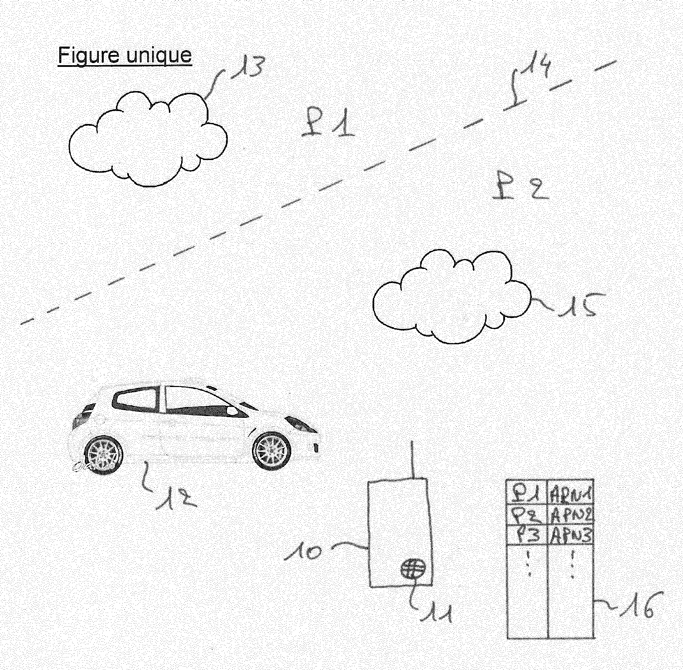

D'autres caractéristiques et avantages de l'invention apparaîtront à la lecture de la description suivante d'un mode de mise en oeuvre préférentiel de l'invention, donné à titre illustratif et non limitatif, et de la figure unique annexée qui représente un système dans lequel la présente invention est mise en oeuvre.

Sur la figure unique, un terminal 10 de type M2M comprend un MIM 11. Le MIM 11 se présente soit sous la forme d'une carte, telle qu'une carte SIM, ou sous la forme d'un circuit intégré soudé dans le terminal 10. Le terminal 10 est embarqué dans un véhicule 12. Le titulaire du véhicule 12 a souscrit un abonnement principal auprès de son opérateur 13 (HPLMN) situé dans un pays P1. Lorsque l'utilisateur traverse la frontière pour se rendre dans un pays P2, il entre en situation d'itinérance. Comme précédemment indiqué, le trafic de données est surtaxé pour l'utilisateur, au vu de sa situation d'itinérance.

Afin d'éviter cette sur-taxation, l'invention propose, une fois la situation d'itinérance détectée, de connecter automatiquement le terminal 10 à un réseau d'opérateur 15 fournissant un service LBO en fournissant du MIM 11 au terminal 10 l'APN de cet opérateur.

L'APN de l'opérateur auquel le terminal 10 doit se connecter est par exemple compris dans une liste d'opérateurs 16 comprise dans le MIM 11. A chaque pays Pi correspond un APN, noté APNi. Dans son pays d'origine P1, le terminal est connecté à son HPLMN dont l'APN est APN1. En se rendant dans le pays P2, le terminal 10 se connecte au réseau d'opérateur 15 dont l'APN est APN2. Si le véhicule 12 s'était rendu dans un pays P3, il se serait connecté à un réseau d'opérateur dont l'APN est APN3.

Ainsi, dans le cas de la figure annexée, lorsque la situation d'itinérance est détectée, APN1 est remplacé par APN2 dans le terminal 10. Lorsque le terminal 10 retournera dans le pays P1, APN2 sera remplacé par APN1.

Le changement d'APN peut se faire de différentes manières :

Une première solution consiste à détecter un nouveau réseau au niveau du terminal 10 et d'en informer le MIM 11. Par exemple, les codes MCC et MNC d'un réseau d'opérateur étranger (du pays P2) détecté sont transmis au MIM 11. Le MIM 11 détecte alors qu'il est dans le pays P2 et transmet l'APN2 au mobile 10.

La transmission de l'APN2 du MIM 11 au terminal 10 peut se faire soit par une commande SimToolkit (par exemple une commande « Run AT Command ») qui sert à piloter le modem du terminal 10, soit par une commande SyncML « Post APN » transmise du MIM 11 au terminal 10 avec le MIM 11 fonctionnant en mode client et le terminal 10 fonctionnant en mode serveur.

Une autre solution est de détecter la situation d'itinérance au niveau d'un serveur OTA du HPLMN (réseau d'appartenance) et d'effectuer de l'OMA DM (Device Management) à distance. La liste 16 est dans ce cas comprise dans une plate-forme OTA du HPLMN.

Lorsque le mobile 10 reçoit un APN, il se connecte automatiquement au réseau de l'opérateur correspondant et peut communiquer avec celui-ci en mode « data ».

Lorsque la liste des APNs est située au niveau du MIM 11, elle peut être mise à jour via OTA, par exemple lorsque l'opérateur HPLMN du pays P1 passe un accord de LBO avec un opérateur autre que celui dont l'APN est mémorisé dans le MIM 11.

La description précédente a été faite dans le cadre d'une itinérance internationale mais s'applique également dans celui d'une itinérance nationale.

Au niveau de la facturation des communications de données, plusieurs possibilités existent : le VMNO peut refacturer le HMNO en fonction du volume de données échangées avec le terminal 10, un ou plusieurs SMS surtaxés peuvent être transmis par le MIM 11 à l'opérateur assurant le service LBO (par exemple en fonction du volume de données échangées), ou alors un ou plusieurs montants sont directement débités du compte bancaire de l'utilisateur.

L'invention repose sur une application installée dans le terminal 10 ou dans le MIM 11. Elle peut être sous le contrôle du HMNO 13, d'un TSM ou du fabricant de la machine dans laquelle est installé le terminal 10. Cet administrateur gère la liste 16 c'est-à-dire qu'il sélectionne les opérateurs assurant le service LBO.

Après détection de la situation d'itinérance, le MIM met l'opérateur assurant le service LBO dans les fichiers GPRS Loci, Packet Switch Loci, EPS (Evolved Packet Switch en LTE) Loci et envoie une commande de Refresh. Le MIM est alors connecté à cet opérateur et l'application met l'APN à jour.

Deux modes de mises en oeuvre sont possibles :

Si le tableau 16 est dans le MIM 11, une application installée dans le terminal 10 met à jour l'APN.

Une autre solution est de faire fonctionner le MIM 11 en mode serveur, de fournir un service de SyncML, et de synchroniser son tableau 16 avec celui du terminal 10. Dans ce cas, le MIM 11 administre l'APN et c'est ce MIM 11 qui indique au terminal 10 quel APN il doit utiliser.

Un autre modèle de connexion repose sur la capture d'abonnés (« steering » en anglais) : lorsque le terminal 10 entre en situation d'itinérance, il peut se connecter par hasard sur un réseau d'un opérateur assurant un service LBO. Ce réseau peut alors transformer l'APN du HPLMN en un APN local au moment de la résolution de l'adresse de l'URL. Ceci a pour conséquence une capture de la MIM 11 en mode « data ». La résolution est réalisée par le GGSN (« Gateway GPRS Support Node ») qui est une passerelle d'interconnexion entre le réseau paquet mobile (GPRS ou UMTS) et les réseaux IP externes.

L'invention permet de connecter automatiquement un terminal de type M2M à un réseau d'un fournisseur de service LBO, sans aucune intervention de l'utilisateur. Il en résulte des frais de communication de données réduits pour l'utilisateur qui est en situation d'itinérance pour ces communications de données.

## Revendications

1. Procédé de connexion d'un terminal (10) de type M2M comprenant un MIM (11) à un fournisseur de service LBO (15), ledit procédé consistant à :
c- Détecter que ledit terminal (10) est en situation d'itinérance ;
d- Automatiquement connecter ledit terminal (10) au réseau dudit fournisseur de service LBO (15) en fournissant dudit MIM (11) audit terminal (10) l'APN dudit fournisseur de service LBO (15).

2. Procédé selon la revendication 1, **caractérisé en ce que** l'étape -a- consiste à détecter dans ledit MIM (11) que ledit terminal (10) est en situation d'itinérance.

3. Procédé selon la revendication 1, **caractérisé en ce que** l'étape -a- consiste à détecter dans le réseau d'appartenance (13) dudit terminal (10) que ledit terminal (10) est en situation d'itinérance.

4. Procédé selon la revendication 1, **caractérisé en ce que** l'étape -b- consiste à sélectionner ledit APN dans une liste d'opérateurs (16).

5. Procédé selon la revendication 4, **caractérisé en ce que** ladite liste d'opérateurs (16) est comprise dans ledit MIM (11).

6. Procédé selon la revendication 4, **caractérisé en ce que** ladite liste d'opérateurs (16) est comprise dans une plateforme OTA (« Over The Air » en anglais) dudit réseau d'appartenance (13) dudit terminal (10).
